# FASCICULE DE BREVET EUROPEEN

(11) **EP 1 692 412 B1**
(45) Date de publication et mention de la délivrance du brevet: **11.11.2009**
(21) Numéro de dépôt: 04816377.8
(22) Date de dépôt: 13.12.2004
(51) Int. Cl.: F16D 65/12

(54) **ROTOR DE RALENTISSEUR ELECTROMAGNETIQUE COMPORTANT DES AILETTES PERFECTIONNEES DE REFROIDISSEMENT**
ELEKTROMAGNETISCHER RETARDER-ROTOR MIT VERBESSERTEN KÜHLRIPPEN
ELECTROMAGNETIC RETARDER ROTOR COMPRISING IMPROVED COOLING FINS

(30) Priorité: 11.12.2003 FR 0314555
(43) Date de publication de la demande: 23.08.2006
(73) Titulaire: Telma, 95310 Saint-Ouen L'Aumône (FR)
(72) Inventeur: LIU, Zeng, Gang, F-78780 Maurecourt (FR); MARQUES, Georges, F-78570 Andresy (FR)
(74) Mandataire: Gamonal, Didier
(86) Numéro de dépôt international: PCT/FR2004/003204
(87) Numéro de publication internationale: WO 2005/059394

(56) Documents cités:
- EP-A- 0 485 283
- WO-A-02/101259
- FR-A- 1 237 438
- FR-A- 2 218 686
- FR-A- 2 584 878
- GB-A- 2 024 966
- US-A- 2 358 134
- US-A- 2 594 931
- US-A- 3 217 197
- PATENT ABSTRACTS OF JAPAN vol. 0175, no. 72 (M-1497), 18 octobre 1993 (1993-10-18) -& JP 05 164159 A (AISIN TAKAOKA LTD), 29 juin 1993 (1993-06-29)

## Description

### DOMAINE TECHNIQUE DE L'INVENTION

La présente invention concerne un rotor de ralentisseur électromagnétique, notamment pour une transmission de véhicule terrestre à moteur.

L'invention concerne plus particulièrement un rotor du type comportant :
- un disque d'induit annulaire plat destiné à s'étendre en regard d'une série d'ensembles de pôle d'un stator du ralentisseur
- une joue annulaire plate parallèle au disque ;
- et une série d'ailettes de refroidissement formant entretoises axiales dont chacune s'étend axialement entre les faces latérales en vis-à-vis du disque et de la joue et dont certaines se prolongent radialement vers l'intérieur, au-delà du bord périphérique intérieur du disque, pour former une série de bras de fixation du rotor, lesdites ailettes étant inclinées dans le même sens par rapport à un plan radial du rotor.

### ETAT DE LA TECHNIQUE

On sait que pour ralentir des véhicules présentant une grande inertie liée au poids et à la vitesse du véhicule, il est nécessaire d'utiliser un freinage dit d'endurance. En effet, un freinage classique dit de service faisant intervenir des patins de freins qui frottent contre un disque d'un moyeu d'une roue, n'est pas toujours suffisant pour assurer de manière sûre le freinage des véhicules poids lourds, notamment suite à une longue descente. Un freinage d'endurance permet ainsi de maintenir une vitesse déterminée et voulue du véhicule.

En outre, même si le freinage classique avec des patins paraît convenable et qu'il ne nécessite pas l'introduction d'un freinage d'endurance, une usure prématurée des plaquettes est inéluctable. Sans freinage d'endurance, un conducteur doit sans cesse changer les plaquettes de frein. Un freinage d'endurance permet donc aussi de limiter les changement de plaquettes et donc de faire des économies.

Dans le but de réaliser ce freinage d'endurance, on utilise souvent un ralentisseur électromagnétique.

On distingue trois types de ralentisseurs électromagnétiques. Il existe des ralentisseurs électromagnétiques de type "Axial" (marque déposée), des ralentisseurs électromagnétiques de type "Focal" (marque déposée), et des ralentisseurs électromagnétiques de type "Hydral" (marque déposée).

Les trois types de ralentisseurs électromagnétiques cités, sont caractérisés par leur emplacement sur un arbre moteur ou un arbre de transmission de mouvement à au moins une roue du véhicule.

Les ralentisseurs de type axial sont situés sur l'arbre de transmission. Ils "coupent" cet arbre de transmission en deux tronçons ou parties. Deux joints de cardan sont utilisés pour les ralentisseurs axiaux. Ces joints de cardan relient les ralentisseurs axiaux aux deux extrémités de l'arbre de transmission. Ces joints de cardan ont pour but d'éviter au ralentisseur axial de devenir mécaniquement hyperstatique en lui conférant des degrés de liberté suffisants. Dans le cas où le système serait hyperstatique, le ralentisseur ne posséderait pas assez de degrés de liberté permettant sa rotation adéquate, et au moindre choc il céderait et se séparerait du véhicule. Classiquement un ralentisseur électromagnétique axial se trouve dans la ligne de transmission de mouvement entre un pont et une boîte de vitesses du véhicule et il comporte un arbre de liaison entre les deux joints de cardan.

Dans un ralentisseur électromagnétique de type axial, le stator porte à sa périphérie radialement intérieure un manchon équipé de roulements. Ces roulements peuvent être de type conique. Ces roulements interviennent de manière radiale entre l'arbre de liaison et le manchon et ils assurent le maintien de l'arbre en évitant qu'il se désaxe. Ces roulements calent l'arbre de manière à ce que les degrés de liberté de l'arbre lui permettent une rotation continue. Le ralentisseur axial se "branche" donc sur l'arbre de transmission.

En ce qui concerne les ralentisseurs électromagnétiques du type Focal, ils se trouvent en entrée du pont ou en sortie de la boîte de vitesses du moteur thermique du véhicule. Dans un exemple, les ralentisseurs du type Focal sont attachés ou reliés à un plateau d'un arbre d'entrée du pont par l'intermédiaire d'un joint cardan. Pour ces ralentisseurs électromagnétiques, l'arbre de transmission de mouvement est en une seule partie. Le pont d'un véhicule est la pièce qui entraîne un arbre de roue. Cet arbre de roue entraîne au moins une roue de ce même véhicule. Un tel ralentisseur est décrit dans le document FR-A-2.577.357 et se branche sur l'arbre de sortie de la boite de vitesses ou sur l'arbre d'entrée du pont.

Le ralentisseur électromagnétique de type Hydral est décrit par exemple dans le document FR-A-2.627.913. Ce ralentisseur est généralement monté en focal. Le refroidissement d'un ralentisseur Hydral est effectué par un circuit d'eau de refroidissement du moteur du véhicule, tandis qu'un ralentisseur Focal ou axial utilise un ventilateur pour réaliser ce refroidissement. Par rapport à un ralentisseur électromagnétique Focal ou axial classique, le circuit d'eau du ralentisseur électromagnétique Hydral rend celui-ci plus performant.

De manière générale, la structure de base d'un ralentisseur électromagnétique, de quelque type qu'il soit, comporte au moins un stator et au moins un rotor. Un entrefer axial très réduit correspondant à un espace existe entre le rotor et le stator. Le stator, s'il est inducteur, porte à proximité et le long d'une périphérie, au moins une bobine. Le rotor induit est placé selon un plan parallèle à un plan du stator inducteur. Le rotor tourne autour d'un axe du stator. Un mouvement de rotation est imprimé au rotor par l'intermédiaire d'un arbre de transmission du véhicule.

Le rotor, s'il est induit, ne porte pas de bobine(s). Le rotor induit est prévu pour assurer la fermeture du champ magnétique produit par les bobines solidaires du stator.

Dans certains cas, par exemple dans le document FR-A-2.627.913, le stator peut être induit et le rotor inducteur. Dans ces cas, le rotor inducteur porte les bobines et le stator induit ne porte aucune bobine.

Généralement, les ralentisseurs électromagnétiques comportent un nombre pair de bobines de polarités alternées. Souvent, les ralentisseurs électromagnétiques comportent au moins six bobines. Une bobine possède une forme cylindrique annulaire creuse. Cependant, la section de la bobine peut être autre que annulaire circulaire. Une bobine peut être par exemple carrée, elliptique ou de toute autre forme géométrique.

Les bobines sont formées par l'enroulement d'un fil électrique autour de la forme de révolution choisie. Dans un exemple, les bobines sont réalisées à partir d'un fil de cuivre recouvert d'une couche citrique isolante. L'enroulement du fil de cuivre permet de définir un axe de la bobine orthogonal au sens d'enroulement du fil électrique.

Les ralentisseurs électromagnétiques de type axial comportent généralement deux rotors et deux stators. Les deux stators comportent des flasques accolées sur une face opposée à une face d'insertion des bobines et forment ainsi un seul stator relié au châssis du véhicule. L'assemblage entre les deux stators et le châssis est de préférence réalisé par l'intermédiaire de blocs élastiques.

Les ralentisseurs électromagnétiques de type Focal comportent généralement deux rotors et un stator. Le stator est relié au carter de la boîte de vitesse ou du pont. Les deux rotors sont assemblés entre eux. Dans un exemple, les rotors sont fixés sur les extrémités axiales d'une pièce intermédiaire axiale en forme de manchon, ou de bagues, traversant l'orifice central du stator. Cette pièce intermédiaire porte un disque sur lequel se montent un arbre de transmission et un arbre menant de la boîte vitesses ou mené du pont.

Un phénomène physique appelé phénomène des courants de Foucault permet aux ralentisseurs électromagnétiques de réaliser le ralentissement effectif du véhicule et donc le freinage d'endurance. Ces courants de Foucault, sont aussi appelés courants magnétiques. Ces courants apparaissent dans une masse métallique placée dans un champ magnétique variable.

Dans une application, le champ magnétique des trois types de ralentisseurs est fourni par des bobines dont les polarités sont alternées. Les trois types de ralentisseurs possèdent des noyaux de préférence en fer doux montés dans les bobines et des épanouissements qui ont pour but de prolonger et de guider l'effet magnétique de la bobine.

L'épanouissement polaire est une pièce polaire qui guide le champ magnétique des bobines. Dans certains cas, l'épanouissement possède une forme particulière qui le fait dépasser circonférentiellement de la bobine afin d'optimiser le passage d'un flux magnétique. Le flux magnétique est lié à l'intensité du champ magnétique, ainsi qu'à la surface de la pièce polaire que le champ traverse.

L'épanouissement et les noyaux forment une masse métallique. En présence de cette masse métallique, et du champ magnétique créé par les bobines, et lorsqu'un rotor du ralentisseur tourne, la valeur, la direction et le sens du champ magnétique deviennent variables. Les courants de Foucault apparaissent alors de manière qu'un couple qui leur est associé s'oppose à la rotation du rotor. Ce couple lié à l'apparition de courant permet ainsi aux ralentisseurs électromagnétiques de s'opposer au mouvement de l'arbre moteur du véhicule et de ralentir le mouvement du véhicule.

Ce ralentissement est réalisé en fonction de l'intensité du courant parcourant les bobines et en fonction de la vitesse de rotation du rotor. Les courants et la vitesse de rotation du rotor sont à l'origine d'un couple de freinage et d'une énergie de freinage. L'énergie de freinage est convertie en chaleur. Pour dissiper cette chaleur, les ralentisseurs électromagnétiques utilisent des systèmes de refroidissement.

La puissance d'un ralentisseur dépend de celle des courants de Foucault. Or le champ ou le flux magnétique produit par les bobines forme un circuit magnétique entre la bobine, l'épanouissement et le rotor. Donc plus particulièrement, la puissance d'un ralentisseur dépend aussi du flux magnétique que le ralentisseur est capable de transmettre entre le rotor et l'épanouissement.

L'épanouissement et le rotor possèdent chacun des surfaces planes et lisses et ils sont séparés par l'entrefer.

Plus précisément la surface plane du rotor appartient à un anneau ou disque annulaire que comporte celui-ci.

Le rotor, aussi appelé rotor d'induit, comporte par exemple un disque annulaire plat "épais" en matériau ferromagnétique qui, en fonctionnement, défile en rotation en regard d'une succession d'ensembles de pôle magnétiques alternés, positifs et négatifs, qui sont aussi agencés circonférentiellement en couronne.

La face latérale du disque adjacente aux ensembles de pôle est séparée de ceux-ci par un entrefer ou jeu axial.

Le disque épais, et donc le rotor, est freiné du fait de la formation de courants de Foucault dans la masse du disque.

Les extrémités radialement intérieures des bras de fixation du rotor sont par exemple reliées à une bague ou à un tambour intérieur.

Le document FR-A-2.577.357 décrit et illustre la conception générale d'un exemple de réalisation d'un tel ralentisseur comportant deux rotors d'induit identiques agencés axialement de part et d'autre du stator et dont les bras sont reliés à des bagues centrales adjacentes auxquelles une bride de joint de cardan de transmission est fixée et liée en rotation.

L'évacuation des calories qui résultent de l'échauffement du disque du rotor par les courants de Foucault, lors du fonctionnement du ralentisseur comportant un tel rotor, se fait par conduction thermique à travers les ailettes en direction de la joue et par rayonnement et convection à partir du disque, des ailettes, des bras et de la joue. Il s'y ajoute un phénomène de ventilation, ou d'auto-ventilation, car la conception du rotor avec ses couronnes d'ailettes fait du rotor une roue de ventilateur qui balaye un air de refroidissement qui, en circulant à travers le rotor, en refroidit les surfaces chaudes.

La puissance d'un ralentisseur, c'est à dire sa capacité de freinage pour un courant déterminé d'alimentation des bobines des ensemble de pôle électromagnétiques, dépend de celle des courants de Foucault formés dans le disque et donc de la température de ce dernier.

En effet, plus précisément, le couple de ralentissement efficace disponible décroît de manière importante en fonction de l'échauffement du disque qui résulte de la formation des courants de Foucault.

La valeur "à chaud" du couple de ralentissement, par exemple après quelques minutes de fonctionnement continu et prolongé, peut être réduite par exemple d'environ un tiers par rapport à sa valeur instantanée "à froid", pour des valeurs données du régime de rotation et de la puissance électrique consommée, lorsque la température du disque s'élève depuis la température ambiante jusqu'à une température de fonctionnement de l'ordre de 700°C à 750°C.

La capacité du rotor à se refroidir est donc un facteur important de l'efficacité ou rendement du ralentisseur électromagnétique.

Par ailleurs, même lorsque le ralentisseur n'est pas mis en oeuvre, le rotor (qui est lié en rotation à un organe tournant de la transmission de véhicule) tourne en permanence et sa conception en roue de ventilateur à ailettes provoque une perte de puissance par ventilation qui affecte le rendement mécanique global du groupe motopropulseur et de la transmission du véhicule. Cette perte par ventilation correspond sensiblement à la puissance de ventilation par le rotor et elle est notamment fonction du nombre, de la forme et de l'agencement des ailettes du rotor.

Afin d'améliorer le refroidissement d'un rotor du type mentionné en préambule, on a proposé dans le document FR-A-2.584.878, conforme au préambule de la revendication 1, une conception du rotor comportant :
- au moins une première couronne, radialement intérieure, d'ailettes de refroidissement formant entretoises axiales dont chacune s'étend axialement entre les faces latérales en vis-à-vis du disque et de la joue et dont certaines se prolongent globalement radialement vers l'intérieur, au-delà du bord périphérique intérieur du disque, pour former une série de bras de fixation du rotor ;
- et au moins une deuxième couronne, concentrique et radialement extérieure par rapport à la première couronne, d'ailettes de refroidissement formant entretoises axiales dont chacune s'étend axialement entre les faces latérales en vis-à-vis du disque et de la joue.

Dans ce document, les ailettes des première et deuxième couronnes sont des ailettes courbes en forme générale de tuile bombée dont la concavité est orientée vers l'arrière en considérant le sens de rotation du rotor.

Ce document propose divers agencements de plusieurs couronnes d'ailettes en forme de tuile bombée.

La figure 1 de ce document et la figure 3 ci-jointe illustrent ainsi un exemple de réalisation à trois couronnes concentriques d'ailettes en forme de tuiles bombées.

Toutefois, dans le document EP-A- 0 485 283 on a remplacé un grand nombre d'ailettes par des plaquettes indépendantes, thermiquement conductrices et inclinées, cette famille de solutions n'est pas entièrement satisfaisante dans la mesure où on constate que la répartition de l'échauffement n'est pas homogène dans l'ensemble du disque, et qu'il est notamment plus élevé à la périphérie radialement intérieure du disque.

### RESUME DE L'INVENTION

Afin de remédier à ces inconvénients, l'invention propose un rotor **caractérisé en ce que** les ailettes de la première couronne sont des ailettes sensiblement planes en forme de plaque qui s'étendent dans un plan d'orientation sensiblement radiale, par rapport à un plan radial du rotor et en ce que la largeur radiale de la joue est inférieure à celle du disque.

Grâce a la conception selon l'invention, on obtient un refroidissement optimal de la portion radialement intérieure du disque en regard de laquelle s'étendent les ailettes planes globalement radiales de la première couronne.

Selon une autre caractéristique de l'invention, les ailettes de la deuxième couronne sont des ailettes courbes en forme générale de tuile bombée dont la concavité est orientée vers l'arrière en considérant le sens de rotation du rotor.

On agence ainsi, radialement à l'extérieur, des ailettes ou aubages courbes dont la perte par ventilation est plus faible que celle induite par les ailettes planes radiales, et ceci d'autant plus avantageusement que la perte par ventilation est globalement proportionnelle au cube du rayon moyen de la couronne.

Selon encore d'autres caractéristiques de l'invention :
- les ailettes de la deuxième couronne sont des ailettes sensiblement planes en forme de plaque ;
- le rotor comporte au moins une troisième couronne, concentrique et radialement intermédiaire entre les première et deuxième couronnes, d'ailettes de refroidissement formant entretoises axiales dont chacune s'étend axialement entre les faces latérales en vis-à-vis du disque et de la joue ;
- les ailettes de la troisième couronne sont des ailettes courbes en forme générale de tuile bombée dont la concavité est orientée vers l'arrière en considérant le sens de rotation du rotor ;
- les ailettes de la troisième couronne sont des ailettes sensiblement planes en forme de plaque ;
- des ailettes planes en forme plaque s'étendent dans un plan incliné par rapport à un plan radial ;
- les ailettes d'une couronne sont réparties angulairement de manière régulière ;
- toutes les ailettes d'une couronne sont identiques.

### DESCRIPTION DES FIGURES

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective avec arrachements d'un exemple de réalisation d'un ralentisseur électromagnétique selon l'état de la technique ;
- la figure 2 est une vue de détail à plus grande échelle et en coupe par le plan axial médian d'un ensemble de pôle ;
- la figure 3 est une vue schématique en perspective avec arrachement qui illustre un exemple de réalisation d'un rotor d'induit avec un agencement d'ailettes en trois couronnes concentriques selon l'état de la technique ;
- la figure 4 est une vue schématique de dessus qui illustre un premier mode de réalisation d'un rotor à deux couronnes concentriques d'ailettes selon l'invention ;
- la figure 5 est une vue analogue à celle de la figure 4 qui illustre un deuxième mode de réalisation d'un rotor à deux couronnes concentriques d'ailettes selon l'invention ;
- la figure 6 est une vue analogue à celle de la figure 4 qui illustre un troisième mode de réalisation d'un rotor à trois couronnes concentriques d'ailettes selon l'invention.

### DESCRIPTION DETAILLEE DES DIVERS MODES DE REALISATION

Dans la description qui va suivre, des éléments et composants identiques, similaires ou analogues seront désignés par les mêmes chiffres de référence.

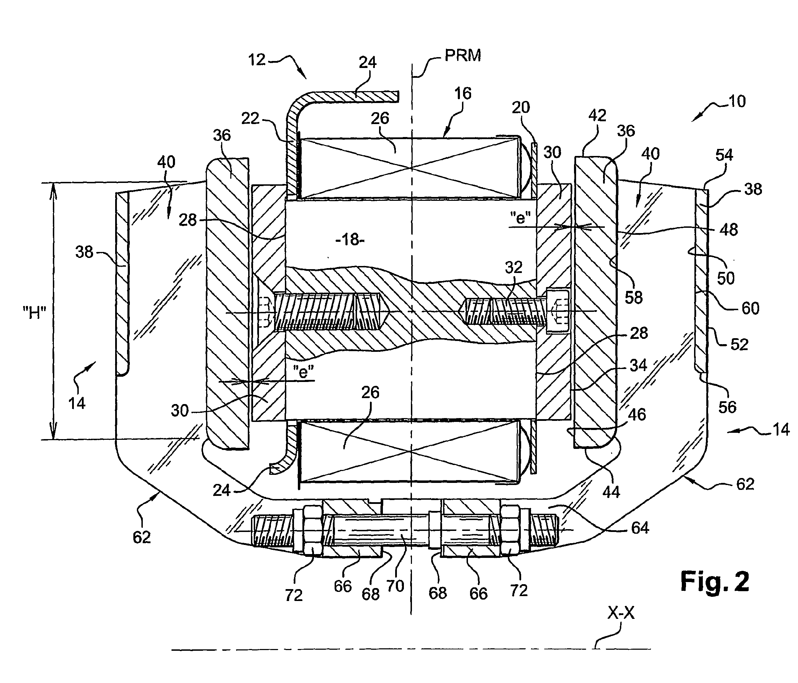

Le ralentisseur présente, pour la plupart de ses composants et notamment pour ses deux rotors, une symétrie de conception par rapport au plan radial médian PRM indiqué à la figure 2.

Le ralentisseur 10 est de forme générale annulaire d'axe central X-X et il comporte un stator central 12 et deux rotors latéraux 14.

Le stator 12 comporte huit ensembles de pôle 16 répartis angulairement de manière régulière autour de l'axe X-X.

Chaque ensemble de pôle 16 comporte un noyau central d'orientation axiale 18 qui traverse, à ses deux extrémités opposées, une plaque radiale annulaire de droite 20 et un flasque radial annulaire de gauche 22 plus épais et dont le bord périphérique 24 est rabattu axialement pour lui conférer une grande rigidité.

Chaque pôle 18 est entouré d'un enroulement de fil électrique 26 de manière à constituer une bobine électromagnétique.

Chaque face transversale radiale d'extrémité 28 du pôle 18 est munie d'une plaque rapportée 30 appelée épanouissement polaire qui est fixée au moyen d'une vis axiale centrale 32.

Chaque épanouissement 30 est délimlitée axialement par une face latérale externe d'extrémité 34 et toutes les faces latérales externes 34 des épanouissements 30 situées d'un même côté du stator sont coplanaires.

Chaque rotor d'induit 14 est un ensemble de forme générale annulaire d'orientation radiale qui est constitué pour l'essentiel d'un disque annulaire latéral interne d'induit 36, d'une joue latérale annulaire externe 38 parallèle au disque 36, et d'ailettes 40 formant entretoises axiales entre le disque 36 et la joue 38. A titre de variante non représentée, la joue 38 peut être tronconique et donc inclinée par rapport au disque 36.

Le disque annulaire 36 est délimité radialement par un bord périphérique annulaire extérieur 42 et par un bord périphérique annulaire intérieur 44.

Le disque 36 est délimité axialement par une face latérale interne dressée 46 qui est adjacente aux faces latérales externes 34 des épanouissements 30 avec un jeu ou entrefer axial "e".

Le disque 36 est aussi délimité axialement par une face latérale externe 48 qui est parallèle à la face 46 et qui s'étend dans un plan radial en vis-à-vis d'une face latérale radiale interne 50 de la joue 38. A titre de variante non représentée, la face latérale externe 48 peut être tronconique et donc inclinée par rapport à la face 46.

La joue 38 est aussi délimitée axialement par une face latérale externe 52, et radialement par un bord périphérique annulaire extérieur 54 et par un bord périphérique annulaire intérieur 56.

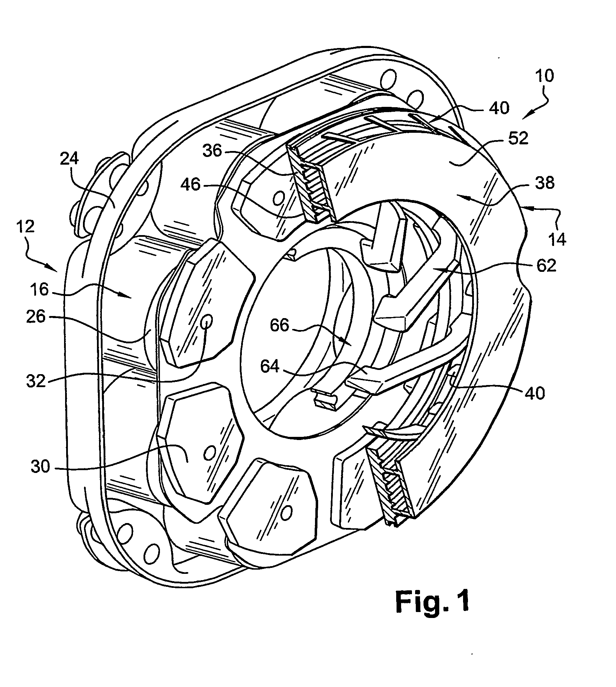

Avantageusement, comme on peut le voir sur les figures 1 et 2, la hauteur ou largeur radiale du disque d'induit 36 est supérieure à celle des épanouissements 30 de manière à assurer un "recouvrement" de celles-ci.

La hauteur ou largeur radiale de la joue externe 38 est inférieure à celle du disque 36 et elle est globalement "centrée" radialement par rapport au disque 36.

De manière connue, les ailettes 40 sont généralement réparties circonférentiellement de manière régulière en une seule couronne et elles constituent des entretoises axiales entre le disque 36 et la joue 38.

Chaque ailette 40 s'étend globalement selon une orientation circonférentielle qu'elle soit, de manière connue, en forme de plaque à faces externes planes et parallèles ou bien en forme de tuiles bombées à faces externes parallèles concave et convexe.

Chaque ailette 40 est délimitée axialement d'une part par un bord latéral interne 58 d'extrémité axiale par lequel elle est reliée à la face latérale externe 48 du disque 36 et, d'autre part, par un bord latéral externe 60 d'extrémité axiale par lequel elle est reliée à la face latérale interne 50 de la joue 38.

De manière connue, certaines des ailettes 40, telles que celles qui sont visibles aux figures 1 à 3, se prolongent, globalement radialement vers l'intérieur par un bras 62 de fixation du rotor d'induit.

Les bras de fixation 62 sont répartis angulairement de manière régulière et sont par exemple au nombre de quatre ou huit.

Dans l'exemple de réalisation illustré aux figures, chaque bras de fixation 62 est "incliné" et s'étend aussi axialement en direction du plan radial médian PRM.

Chaque bras incliné 62 se termine par un tronçon axial d'extrémité 64 qui est relié à une bague centrale radialement intérieure 66.

Les deux bagues centrales de fixation 66 se font face par leurs faces latérales internes 68 situées de part et d'autre du plan PRM et elles sont fixées et entretoisées par une série de goujons épaulés 70 et d'écrous 72.

Une plaque, ou plateau, centrale appartenant à un organe tournant de transmission de véhicule automobile, non représenté sur les figures, est montée serré axialement entre les faces 68 des bagues centrales 66 et est liée en rotation à ces dernières par les goujons 70.

Afin de permettre la rotation des rotors solidaires 14 par rapport au stator 12, il existe bien entendu un espace radialement entre la périphérie annulaire intérieure du stator 12 et les sous-ensembles constitués par les bras 64, les bagues 66 et les goujons 70.

Comme on peut le voir aussi à la figure 1, chaque bras de fixation est aussi incliné par rapport à un plan radial passant par l'axe, c'est à dire que son tronçon axial radialement intérieur est décalé angulairement vers l'avant par rapport à son extrémité radialement extérieure par laquelle il est relié à l'ailette 40, en considérant le sens "R" de rotation des rotors 14 par rapport au stator 12.

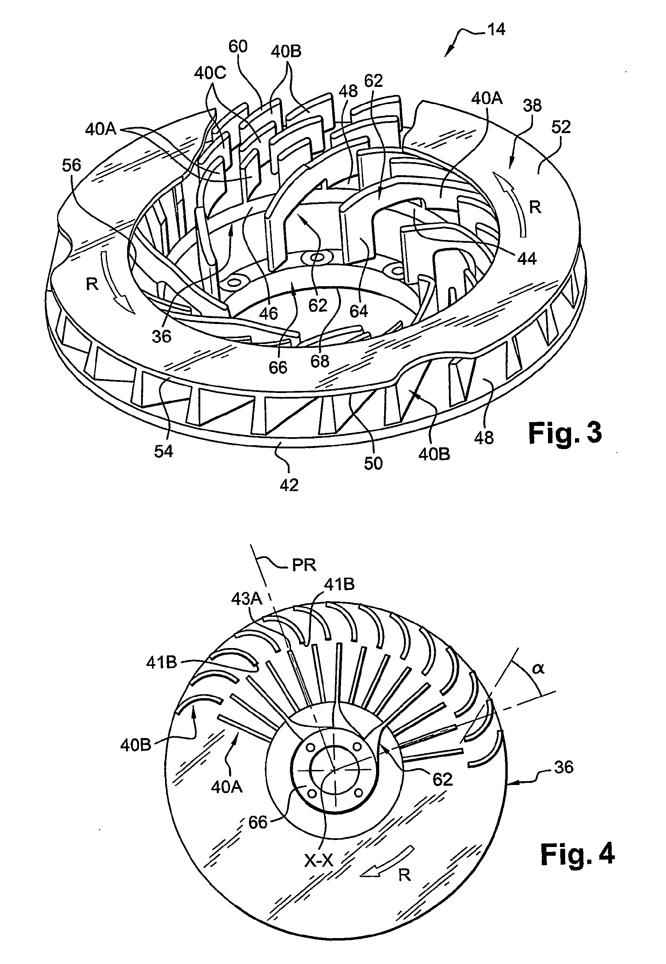

On a représenté à la figure 3 un exemple de réalisation selon l'état de la technique correspondant au document FR-A-2.584.878 dans lequel chaque ailette 40 est "divisée" en trois tronçons ou parties.

Ainsi, les ailettes formant entretoises entre le disque 36 et la joue 38 sont ici réparties en trois couronnes concentriques d'ailettes de refroidissement.

Une première série d'ailettes 40A constitue la couronne radialement la plus intérieure et certaines des ailettes 40A se prolongent pour constituer les bras 62 de fixation du rotor 14.

Une deuxième série d'ailettes 40B constitue la couronne radialement la plus extérieure.

Enfin, le rotor comporte une troisième série d'ailettes 40C qui constitue une troisième couronne d'ailettes qui est radialement intermédiaire entre les première et deuxième couronnes.

Autrement dit, une ailette de refroidissement est constituée de trois tronçons 40A, 40C et 40B qui sont consécutifs radialement de l'intérieur vers l'extérieur.

Toutes les ailettes 40A, 40C et 40B sont du même type, c'est à dire qu'il s'agit d'ailettes courbes à profil incurvé en forme générale de "tuiles" bombées d'épaisseur sensiblement constante dont les faces parallèles amont convexe et aval concave sont parallèles.

Ainsi, la face concave de chaque ailette est orientée vers l'arrière en considérant le sens de rotation "R" du rotor 14.

Chaque série d'ailettes 40A, 40C et 40B agencées en couronne comporte ici par exemple le même nombre d'ailettes réparties angulairement de manière régulière.

Comme cela a été expliqué en préambule, ni les ailettes courbes 40 agencées en une seule couronne, ni les ailettes courbes agencées en plusieurs couronnes concentriques ne permettent de refroidir suffisamment la portion radialement la plus intérieure du disque d'induit 36.

Selon le premier mode de réalisation de l'invention illustré à la figure 4, le rotor 14 comporte une première couronne d'ailettes 40A, radialement la plus intérieure, constituée d'une série d'ailettes 40A sensiblement planes en forme de plaques d'orientation radiale, et comporte une deuxième couronne d'ailettes radialement la plus extérieure, constituée d'une série d'ailettes courbes 40B dont chacune est en forme générale de tuile bombée dont la concavité est orientée vers l'arrière en considérant le sens de rotation R du rotor 14.

Les ailettes planes 40A à faces latérales planes parallèles sont chacune ici d'orientation radiale, c'est à dire que chacune s'étend dans un plan radial PR.

Les ailettes courbes 40B de la deuxième couronne sont inclinées d'un angle α par apport à un plan radial PR et ce dans le même sens comme visible dans cette igure 4.

Les ailettes 40A de la première couronne sont réparties angulairement de manière régulière autour de l'axe X-X, de même que les ailettes courbes 40B de la deuxième couronne d'ailettes.

Comme on peut le voir sur la figure 4, les ailettes des deux couronnes sont en nombre identique et elles sont décalées angulairement d'une couronne à l'autre. Ainsi, l'extrémité radiale extérieure 43A d'une ailette plane 40A de la première couronne est située entre les extrémités radiales intérieures 41 B de deux ailettes consécutives 40B de la deuxième couronne.

A titre d'exemple, une ailette 40A sur quatre de la première couronne se prolonge ici par un bras de fixation 62, les bras de fixation étant alors au nombre de huit et les ailettes de chaque couronne sont ici au nombre de trente deux.

Les ailettes planes radiales de la couronne intérieure procurent un refroidissement optimal de la périphérie intérieure du disque 36, tandis que la perte par ventilation par les ailettes "extérieures" courbes est réduite.

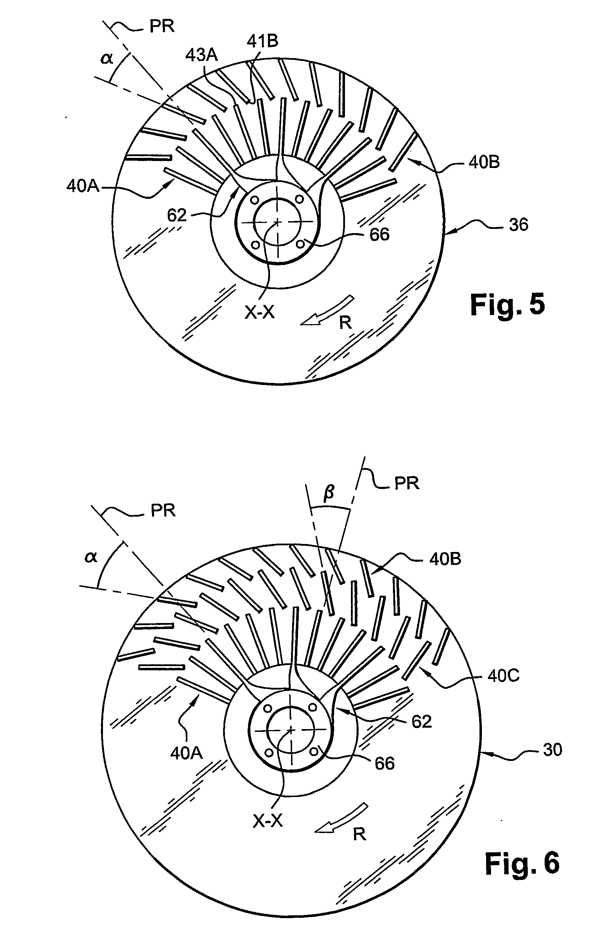

Le deuxième mode de réalisation illustré à la figure 5 diffère du précédent par la conception des ailettes 40B de la deuxième couronne extérieure qui sont elles aussi des ailettes planes d'orientation globalement radiale.

Toutefois, les ailettes ne sont pas "purement" radiales comme les ailettes 40A de la première couronne, mais chacune d'entre elles est inclinée d'un angle "α" par rapport à un plan radial PR, l'inclinaison étant ici vers l'arrière en considérant le sens de rotation "R" du rotor 14.

Dans le troisième mode de réalisation illustré à la figure 6, et si on le compare au précédent, le rotor comporte une troisième série d'ailettes 40C qui sont agencées selon une couronne radialement intérieure entre les deux couronnes d'ailettes intérieures 40A et extérieures 40B.

Dans ce mode de réalisation, les ailettes intermédiaires 40C sont des ailettes planes d'orientation globalement radiale et qui, comme les ailettes 40B, sont inclinées vers l'arrière d'un angle "β" par rapport à un plan radial PR l'angle "β" étant différent de l'angle "α" dans ce mode de réalisation.

Les ailettes 40C sont décalées angulairement tant par rapport aux ailettes intérieures 40A, que par rapport aux ailettes extérieures 40B.

Un tel mode de réalisation, dans lequel toutes les ailettes sont planes et essentiellement d'orientation radiale, est adopté lorsque les pertes par ventilation ne sont pas déterminantes et que l'on souhaite privilégier le refroidissement du disque de manière à obtenir une bonne performance au couple du ralentisseur.

Au-delà des trois modes de réalisation qui viennent d'être décrits à titre d'exemple, de nombreuses variantes et combinaisons sont possibles sans sortir du cadre de l'invention.

Le nombre d'ailettes dans chaque couronne et le nombre de couronnes, au moins égal à deux, peuvent être quelconques.

Le rayon de courbure des ailettes courbes et l'angle moyen de leur inclinaison par rapport à un plan radial peuvent être quelconques.

De même, l'angle "α" ou "β" d'inclinaison des ailettes planes par rapport à un plan radial peut être quelconque, de préférence compris entre +30 ou -30 degrés, voire +45 ou -45 degrés.

La forme des ailettes courbes et/ou l'angle d'inclinaison des ailettes d'une même couronne peuvent être différents.

De même la hauteur ou épaisseur axiale des ailettes peut varier dans une même couronne, ou d'une couronne à l'autre.

Les ailettes peuvent être réalisées venues de matière par moulage avec le disque et/ou la joue, ou bien être rapportées par exemple soudage.

L'invention trouve à s'appliquer à tout type de ralentisseur, et notamment aux modèles "Hydral", "Axial" ou Focal" commercialisés par la Société "TELMA".

## Revendications

1. Rotor (14) de ralentisseur électromagnétique (10), notamment pour une transmission de véhicule terrestre à moteur, du type comportant :
- un disque d'induit annulaire plat (36) destiné à s'étendre en regard d'une série d'ensembles de pôle (16) d'un stator (12) du ralentisseur (10) ;
- une joue annulaire plate (38) parallèle au disque (36);
- au moins une première couronne, radialement intérieure, d'ailettes (40A) de refroidissement formant entretoises axiales dont chacune s'étend axialement entre les faces latérales en vis-à-vis (48) du disque (36) et (50) de la joue (38) et dont certaines se prolongent globalement radialement vers l'intérieur, au-delà du bord périphérique intérieur (44) du disque (36), pour former une série de bras (62) de fixation du rotor (14) ;
- et au moins une deuxième couronne, concentrique et radialement extérieure par rapport à la première couronne d'ailettes (40A), d'ailettes (40B) de refroidissement formant entretoises axiales dont chacune s'étend axialement entre lesdites faces latérales en vis-à-vis (48) du disque (36) et (50) de la joue (38), lesdites ailettes (40B) de la deuxième couronne étant inclinée dans le même sens par rapport à un plan radial (PR) du rotor,
**caractérisé en ce que** les ailettes (40A) de la première couronne sont des ailettes sensiblement planes en forme de plaques, en ce lesdites ailettes s'étendent dans un plan d'orientation sensiblement radial et **en ce que** la largeur radiale de la joue (38) est inférieure à celle du disque (36).

2. Rotor de ralentisseur électromagnétique selon la revendication précédente, **caractérisé en ce que** les ailettes (40B) de la deuxième couronne sont des ailettes courbes en forme générale de tuile bombée dont la concavité est orientée vers l'arrière en considérant le sens de rotation (R) du rotor (14).

3. Rotor de ralentisseur électromagnétique selon la revendication 1, **caractérisé en ce que** les ailettes (40B) de la deuxième couronne sont des ailettes sensiblement planes en forme de plaque.

4. Rotor de ralentisseur électromagnétique selon l'une quelconque des revendications précédentes, **caractérisé en ce qu'**il comporte au moins une troisième couronne, concentrique et radialement intermédiaire entre les première (40A) et deuxième (40B) couronnes, d'ailettes (40C) de refroidissement formant entretoises axiales dont chacune s'étend axialement entre les faces latérales en vis-à-vis (48) du disque (36) et (50) de la joue (38).

5. Rotor de ralentisseur électromagnétique selon la revendication précédente, **caractérisé en ce que** les ailettes (40C) de la troisième couronne sont des ailettes courbes en forme générale de tuile bombée dont la concavité est orientée vers l'arrière en considérant le sens de rotation (R) du rotor.

6. Rotor de ralentisseur électromagnétique selon la revendication 4, **caractérisé en ce que** les ailettes (40C) de la troisième couronne sont des ailettes sensiblement planes en forme de plaque.

7. Rotor de ralentisseur électromagnétique selon l'une quelconque des revendications 4 à 6, **caractérisé en ce que** l'angle d'inclinaison des ailettes (40B, 40C) d'une couronne est compris entre +30 et -30 degrés.

8. Rotor de ralentisseur électromagnétique selon la revendication 6 ou 7 **caractérisé en ce que** les deuxième et troisième couronnes comportent des ailettes planes en forme plaque qui s'étendent dans un plan incliné par rapport à un plan radial et **en ce que** l'angle d'inclinaison des ailettes de chacune des deuxième et troisième couronne est différent.

9. Rotor de ralentisseur électromagnétique selon l'une quelconque des revendications précédentes, **caractérisé en ce que** les ailettes (40A, 40B, 40C) d'une couronne sont réparties angulairement de manière régulière.

10. Rotor de ralentisseur électromagnétique selon l'une quelconque des revendications précédentes, **caractérisé en ce que** toutes les ailettes (40A, 40B, 40C) d'une couronne sont identiques.

11. Rotor de ralentisseur électromagnétique selon l'une quelconque des revendications précédentes, **caractérisé en ce que** les ailettes (40A, 40B, 40C) sont venues de matière par moulage avec le disque (36) et/ou la joue (38).

## Claims

1. Rotor (14) for an electromagnetic retarder (10) in particular for a transmission for a land vehicle with an engine, of the type comprising:
- a flat annular armature disc (36) intended to extend opposite a series of pole sets (16) of a stator (12) of the retarder (10);
- a flat annular flange (38) parallel to the disc (36);
- at least one first ring, radially innermost, of cooling fins (40A) forming axial spacers, each of which extends axially between the opposite lateral faces (48) of the disc (36) and (50) of the flange (38) and some of which are extended globally radially towards the inside, beyond the internal peripheral edge (44) of the disc (36), in order to form a series of fixing arms (36) for the rotor (14);
- and at least one second ring, concentric and radially external with respect to the first ring (40A), of cooling fins (40B) forming axial spacers, each of which extends axially between the said opposite lateral faces (48) of the disc (36) and (50) of the flange (38), said fines (40B) of the second ring being inclined in the same direction with respect to a radial plane PR of the rotor,
**characterised in that** the fins (40A) on the first ring are substantially flat fins in the form of plates, **in that** said fins (40a) lie in a substantially radially oriented plane and **in that** the radial width of the flange (38) is less than that of the disc (36).

2. Electromagnetic retarder rotor according to the preceding claim, **characterised in that** the fins (40B) on the second ring are curved fins in the overall form of a curved tile whose concavity is oriented towards the rear, looking in the direction of rotation (R) of the rotor (14).

3. Electromagnetic retarder rotor according to claim 1, **characterised in that** the fins (40B) on the second ring are substantially flat fins in the form of a plate.

4. Electromagnetic retarder rotor according to any one of the preceding claims, **characterised in that** it comprises at least one third ring, concentric and radially intermediate between the first (40A) and second (40B) rings, of cooling fins (40C) forming axial spacers each of which extends axially between the opposite lateral faces (48) of the disc (36) and (50) of the flange (38).

5. Electromagnetic retarder rotor according to the preceding claim, **characterised in that** the fins (40A) on the third ring are curved fins in the general form of a curved tile whose concavity is oriented towards the rear looking in the direction of rotation (R) of the rotor.

6. Electromagnetic retarder rotor according to claim 4, **characterised in that** the fins (40B) on the third ring are substantially flat fins in the form of a plate.

7. Electromagnetic retarder rotor according to any one of the claims 4 to 6, **characterised in that** the angle of inclination of the flat fins (40B, 40C) of a ring is between +30° and -30°.

8. Electromagnetic retarder rotor according to claims 6 or 7, **characterised in that** the second and third rings comprise flat fins in the form of a plate that extend in a plane inclined with respect to a radial plane and **in that** the angle of inclination of the fins of each of the second and third rings is different.

9. Electromagnetic retarder rotor according to any one of the preceding claims, **characterised in that** the fins (40A, 40B, 40C) of a ring are distributed angularly in a regular manner.

10. Electromagnetic retarder rotor according to any one of the preceding claims, **characterised in that** all the fins (40A, 40B, 40C) of a ring are identical.

11. Electromagnetic retarder rotor according to any one of the preceding claims, **characterised in that** the fins (40A, 40B, 40C) are in one piece by moulding with the disc (36) and /or the flange (38).

## Patentansprüche

1. Rotor eines elektromagnetischen Retarders, insbesondere für einen Antriebsstrang eines land Kraftfahrzeugs mit einem Motor, umfassend:
- eine ringförmige, flache induzierte Scheibe (36), die dazu bestimmt ist, gegenüber einer Folge der Pole der Stator (12) des Retarders zu erstrecken;
- ein ringförmiger, flacher Flansch parallel zur Scheibe (36);
- mindestens einen ersten Kranz, radial nach innen, von Ventilationsflügel (40A), die axialen Stege bilden und die sich jeweils axial zwischen die gegenüber seitlichen Fläche (48) der Scheibe (36) und (50) des Kranzes (38) erstrecken, und die gewisse sich insgesamt radial nach innen, jeneseits von dem inneren Umfangsrand (44) der Scheibe (36), verlängert um eine Reihe von Befestingungsarmen (62) des Rotors (14) zu bliden ;
- und mindestens einen zweiten Kranz, konzentrisch und radial nach aussen gegenüber dem ersten Kranz (40A), von Ventilationsflügel (40B), die axialen Stege bilden, und die sich jeweils axial zwischen die gegenüber seitlichen Fläche (48) der Scheibe (36) und (50) des Kranzes (38) erstrecken, wobei die Ventilationsflügel (40C) des zweiten Kranzes in die gleiche Richtung gegenüber einer radialen Ebene (PR) des Rotors (14)geneigt sind;
**dadurch gekennzeichnet, dass** die Flügel (40A) des ersten Kranzes insgesamt plattenförmige flache Flügel sind, dass die Flügel (40A) insgesamt in eine radiale orientierte Ebene erstrecken und dass die radiale Breite des Kranzes kleiner als die Breite der Scheibe (36) ist.

2. Rotor eines elektromagnetischen Retarders nach dem vorhergehenden Anspruch, **dadurch gekennzeichnet, dass** die Flügel (40B) des zweiten Kranzes gekrümmte Flügel in allgemeine Form eines gekrümmten Dachziegel sind, dessen konkave Seite bezüglich der Drehrichtung (R) des Rotor (14) nach hinten gerichtet ist.

3. Rotor eines elektromagnetischen Retarders nach dem Anspruch 1, **dadurch gekennzeichnet, dass** die Flügel des zweiten Kranzes insgesamt plattenförmige flache Flügel sind.

4. Rotor eines elektromagnetischen Retarders nach einem der vorhergehenden Ansprüche, **dadurch gekennzeichnet, dass** er mindestens einen dritten Kranz, konzentrisch und radial zwischen die ersten (40A) und zweiten (40B) Kränze, von Ventilastionsflügel (40C) umfasst, welche Stege zwischen die gegenüberligenden Fläche (48) der Scheibe (36) und (50) des Flansches bilden.

5. Rotor eines elektromagnetischen Retarders nach dem vorhergehenden Anspruch, **dadurch gekennzeichnet, dass** die Flügel (40A) des drittens Kranzes gekrümmte Flügel in allgemeine Form eines gekrümmten Dachziegel sind, dessen konkave Seite bezüglich der Drehrichtung (R) des Rotor (14) nach hinten gerichtet ist

6. Rotor eines elektromagnetischen Retarders nach dem Anspruch 4, **dadurch gekennzeichnet, dass** die Flügel (40B) des dritten Kranzes flache plattenförmige Flügel sind.

7. Rotor eines elektromagnetischen Retarders nach einem der vorhergehenden Ansprüche 4 bis 5, **dadurch gekennzeichnet, dass** die Neigungswinkel den Flügel eines Kranzes zwischen +30° und -30° enthalten ist.

8. Rotor eines elektromagnetischen Retarders nach dem Anspruch 6 oder 7, **dadurch gekennzeichnet, dass** die zweiten und dritten Kränze plattenförmige flache Flügel umfassen, wobei jeder Flügel in eine geneigte Ebene gegenüber einem radialen Ebene erstreckt und dass den Neigungswinkel jedem Flügel des zweiten und dritten Kränze unterschiedlich ist.

9. Rotor eines elektromagnetischen Retarders nach einem der vorhergehenden Ansprüche, **dadurch gekennzeichnet, dass** die Flügel (40A, 40B, 40C) eines Kranzes winklich regelmässig verteilt sind.

10. Rotor eines elektromagnetischen Retarders nach einem der vorhergehenden Ansprüche, **dadurch gekennzeichnet, dass** die Flügel (40A, 40B, 40C) eines Kranz identisch sind.

11. Rotor eines elektromagnetischen Retarders nach einem der vorhergehenden Ansprüche, **dadurch gekennzeichnet, dass** die Flügel (40A, 40B, 40C) aus einem einzigen gegossen Block mit der Scheibe (36) und/oder dem Flansch (36) sind.
